# EUROPÄISCHE PATENTANMELDUNG

(11) **EP 1 752 921 A2**
(43) Veröffentlichungstag der Anmeldung: **14.02.2007**
(21) Anmeldenummer: 06014992.9
(22) Anmeldetag: 19.07.2006
(51) Int. Cl.: G06Q 10/00

(54) **Verfahren zum Erzeugen einer Stückliste eines Produkts mit Varianten**

(30) Priorität: 09.08.2005 DE 102005037487
(71) Anmelder: Volkswagen Aktiengesellschaft, 38436 Wolfsburg (DE)
(72) Erfinder: Krehan, Stephan, 38442 Wolfsburg (DE)

(57) **Zusammenfassung**

Die Erfindung betrifft ein Verfahren zum Erzeugen einer Stückliste (100) eines Produkts, das Produktkomponenten (101-116) umfasst, von denen mindestens eine Varianten umfasst, wobei mittels der Stückliste (100) eine Anzahl von unterschiedlichen Konfigurationen des Produkts beschreibbar ist und wobei jede der Konfigurationen Ausstattungsmerkmale umfasst und jedes Ausstattungsmerkmal mindestens zwei Ausprägungen umfasst und eine Konfiguration durch einen vollständigen Satz von Ausprägungen der Ausstattungsmerkmale definiert ist, wobei für jede der Konfigurationen jeweils für jedes der Ausstattungsmerkmale genau eine Ausprägung ausgewählt wird; für die Produktkomponenten Abhängigkeiten von den Ausstattungsmerkmalen zumindest teilweise anhand von bekannten Abhängigkeiten eines Referenzprodukts erfasst werden; jeder Produktkomponente die Ausprägungen der Ausstattungsmerkmale, von denen die Produktkomponente gemäß der erfassten bekannten Abhängigkeiten abhängig ist, jeweils als Ausprägungssatz (61-69, 71-94) für die unterschiedlichen Konfigurationen zugeordnet werden, wobei identische Ausprägungssätze (62, 64, 68) eliminiert werden; und den Produktkomponenten (101-116) der Stückliste jeweils die zugeordneten Ausprägungssätze (61, 63, 65-67, 69, 71-94) zugewiesen werden.

## Beschreibung

Die Erfindung betrifft ein Verfahren zum Erzeugen einer Stückliste eines Produkts, das Produktkomponenten umfasst, von denen mindestens eine Varianten umfasst, wobei mittels der Stückliste eine Anzahl n von unterschiedlichen Konfigurationen des Produkts beschreibbar ist und wobei jede der Konfigurationen Ausstattungsmerkmale umfasst, und jedes Ausstattungsmerkmal mindestens zwei Ausprägungen umfasst, und eine Konfiguration durch einen vollständigen Satz von Ausprägungen der Ausstattungsmerkmale definiert ist.

Produkte werden häufig in verschiedenen Abwandlungen hergestellt und angeboten. Diese Abwandlungen werden als Varianten bezeichnet. Bei einem Produkt, das aus mehreren Produktkomponenten hergestellt ist, ergeben sich die Varianten des Produkts dadurch, dass die Komponenten unterschiedliche Varianten aufweisen oder unterschiedlich zu dem Produkt kombiniert werden.

Für einen Kunden eines Produkts sind nur bestimmte Merkmale wahrnehmbar bzw. auswählbar. Diese Merkmale werden im Folgenden als Ausstattungsmerkmale bezeichnet. Jedes Ausstattungsmerkmal weist mindestens zwei Ausprägungen auf. Um auch optionale Ausstattungsmerkmale erfassen zu können, kann eine Leerausprägung als eine der mindestens zwei Ausprägungen vorgesehen sein. Die Gesamtheit der gewählten Ausprägungen für alle Ausstattungsmerkmale definiert eine Konfiguration des Produkts. Dies bedeutet, ein Ausprägen der Ausstattungsmerkmale definiert eine Variante des Produkts auf einer Kunden- oder Angebotsseite.

Jeder Konfiguration entspricht eine Variante des Produkts. Ein Ausstattungsmerkmal beeinflusst jedoch häufig viele technische Merkmale auf einer Herstellerseite oder Produktionsseite. Beispielhaft wird im Folgenden als Produkt ein Kraftfahrzeug angenommen. Ein Ausstattungsmerkmal "Türenzahl" umfasst beispielsweise die Ausprägungen "zweitürig" und "viertürig". Durch ein Ausprägen dieses Ausstattungsmerkmals wird die Türenzahl beispielsweise auf die Ausprägung "zweitürig" festgelegt. Hierdurch wird neben der Karosseriegestaltung unter anderem auch Einfluss auf die Ausgestaltung der Vordersitze genommen. Im Gegensatz zu Vordersitzen in einem viertürigen Kraftfahrzeug müssen bei einem zweitürigen Kraftfahrzeug die

Rückenlehnen der Vordersitze umklappbar sein, um ein Einsteigen für Passagiere in den Fond möglich zu machen.

Durch das Ausprägen der Ausstattungsmerkmale werden somit indirekt die Produktmerkmale auf der Produktebene festgelegt. Auf der Produktebene wird das Produkt in der Regel mit Hilfe von Stücklisten abgebildet. Eine Stückliste ist eine in der Regel tabellarische Darstellung des Produkts (oder eines Teils eines Produkts), in der die Abhängigkeiten von den jeweiligen Produktkomponenten angegeben sind.

Für eine Konfiguration des Produkts, d. h. eine konkrete Ausführungsform des Produkts, beschreibt eine so genannte 100%-Stückliste die Abhängigkeiten von den Produktkomponenten, die die entsprechende Variante des Produkts "ergeben". Geschickt ist es jedoch, alle Varianten in einer so genannten 150%-Stückliste zu verwalten, in der die einzelnen Produktkomponenten Varianten enthalten. Dies bedeutet, dass es für das Produkt mit Varianten eine gemeinsame Stückliste gibt.

Unter einer Stückliste wird nachfolgend sowohl eine "klassische Stückliste" in Form einer oder mehrerer Tabellen als auch eine ein Produkt baumartig abbildende Produktstruktur verstanden.

Die Erstellung einer Stückliste für ein Produkt mit Varianten ist schwierig. Dies soll am Beispiel eines Vordersitzes für ein Kraftfahrzeug erläutert werden. Auf die Ausgestaltung eines Vordersitzes bei einem Mittelklassepersonenkraftwagen haben beispielsweise 16 Ausstattungsmerkmale einen Einfluss. Diese weisen zwischen 2 und 20 Ausprägungen auf. Die Anzahl der theoretisch möglichen Varianten an Vordersitzen ergibt sich, indem ein Produkt der möglichen Ausprägungen aller Ausstattungsmerkmale gebildet wird, die eine Ausgestaltung des Vordersitzes beeinflussen. Wenn 6 der 16 Ausstattungsmerkmale jeweils 2 Ausprägungen, 3 Ausstattungsmerkmale jeweils 3 Ausprägungen, 3 Ausstattungsmerkmale jeweils 4 Ausprägungen, 2 Ausstattungsmerkmale jeweils 5 Ausprägungen, 1 Ausstattungsmerkmal 6 Ausprägungen und 1 Ausstattungsmerkmal 20 Ausprägungen umfassen, so ergibt sich als Anzahl theoretisch möglicher Varianten 331.776.000. Wie leicht einzusehen ist, ist dieses kombinatorische Verfahren zum Erzeugen von Varianten in einer Stückliste nicht praktikabel.

Eine andere, heute praktizierte Vorgehensweise sieht vor, dass die Varianten per Hand in der Stückliste erzeugt werden. Hierbei besteht jedoch die Schwierigkeit, dass für die einzelnen Produktkomponenten Varianten erzeugt werden. Hierbei ist nicht sichergestellt, dass jeweils zueinander passende Varianten für die Produktkomponenten erzeugt werden. Dies bedeutet, dass möglicherweise für einzelne Produktkomponenten vergessen wird, Produktvarianten zu erstellen, die erforderlich sind, um gewünschte Konfigurationen des Produkts herstellen zu können. Es können auch zu viele Varianten für eine Produktkomponente, beispielsweise doppelte Varianten erstellt werden.

In US 5,119,307 ist ein Verfahren beschrieben, wie eine Stückliste für eine neue Konfiguration eines Produkts erzeugt werden kann. Hierbei werden Design- und Auswahlvorgaben von einem Konstrukteur vorgegeben, um Auswahlregeln zu erstellen. Die Auswahlregeln geben Abhängigkeiten der einzelnen Produktkomponenten von Ausstattungsmerkmalen bzw. technischen Merkmalen an. Anschließend werden bekannte Konfigurationen verwendet, um anhand der Auswahlregeln Auswahltabellen zu erstellen. Für jede Produktkomponente sind jeweils die unterschiedlichen Varianten der Produktkomponente den in den bekannten Konfigurationen auftretenden Ausprägungen der Ausprägungsmerkmale tabellenförmig gegenübergestellt sind, die in den bereits existierenden Konfigurationen auftreten. Durch einen geführten Prozess, bei dem die Ausprägungen der Ausstattungsmerkmale festgelegt werden, wird es ermöglicht, anhand dieser festgelegten Ausprägungen mittels der Auswahltabellen die entsprechenden Varianten der Produktkomponenten auszuwählen, die eine 100%-Stückliste einer neuen oder bekannten Konfiguration ergeben.

Ungelöst bleibt das Problem der Erstellung einer 150%-Stückliste. Insbesondere am Beginn einer Planung und Fertigung eines neuen Produkts ist die Erstellung einer 150%-Stückliste von entscheidender Bedeutung. Soll beispielsweise eine neue Baureihe eines Kraftfahrzeugs entwickelt werden, so ist es notwendig, am Anfang Vorgaben über die Ausstattung des neuen Fahrzeugs (Produkts) festzulegen. In der Regel werden einige unterschiedliche Konfigurationen festgelegt, um sowohl für die Konstruktion als auch die Kalkulation als Grundlage zu dienen. Um den Konstruktionsfortschritt und die notwendigen Konstruktionsaufgaben überwachen zu können, ist es notwendig zu wissen, wie viele und welche Varianten einer Produktkomponente entwickelt werden müssen. Daher ist insbesondere eine Vollständigkeit der 150%-Stückliste für die verschiedenen Konfigurationen, die im Entwicklungsstadium betrachtet werden, zumindest im Hinblick auf die Varianten der Komponenten notwendig.

Der Erfindung liegt die technische Aufgabe zugrunde, ein Verfahren zu schaffen, mit dem eine möglichst vollständige Stückliste für ein Produkt mit Varianten generiert werden kann, wobei insbesondere eine Vollständigkeit im Hinblick auf die Produktkomponenten gewährleistet werden soll, die Varianten des Produkts erzeugen.

Die Aufgabe wird erfindungsgemäß durch ein Verfahren mit den Merkmalen des Patentanspruchs 1 gelöst. Vorteilhafte Ausgestaltungen der Erfindung ergeben sich aus den Unteransprüchen.

Hierfür ist ein Verfahren eingangs genannter Art vorgeschlagen, bei dem a. für jede der Konfigurationen jeweils für jedes der Ausstattungsmerkmale genau eine Ausprägung ausgewählt wird; b. für die Produktkomponenten Abhängigkeiten von den Ausstattungsmerkmalen zumindest teilweise anhand von bekannten Abhängigkeiten eines Referenzprodukts erfasst und festgelegt werden; c. jeder Produktkomponente die Ausprägungen der Ausstattungsmerkmale, von denen die Produktkomponente gemäß der festgelegten Abhängigkeiten abhängig ist, jeweils als Ausprägungssatz für die unterschiedlichen Konfigurationen zugeordnet werden, wobei identische Ausprägungssätze eliminiert werden; und d. den Produktkomponenten der Stückliste jeweils die zugeordneten Ausprägungssätze zugewiesen werden. Bei dem Referenzprodukt handelt es sich vorzugsweise um ein möglichst ähnliches Produkt. Die Abhängigkeiten der Produktkomponenten des Referenzprodukts von den Ausstattungsmerkmalen, die auch das Produkt betreffen, für das die Stückliste erstellt wird, werden erfasst und beim Festlegen der Abhängigkeiten mitberücksichtigt. Hierdurch wird sichergestellt, dass die Produktkomponenten identifiziert werden, die von einer Ausprägung eines der Ausstattungsmerkmale abhängig sind. Hierdurch wird eine Vollständigkeit der 150%-Stückliste erreicht, die bei einer manuellen Erzeugung der Produktkomponentenvarianten nicht gewährleistet ist. Beim Ermitteln der Abhängigkeiten anhand des Referenzprodukts, werden nur die Ausstattungsmerkmale des Produkts berücksichtigt, die für das Produkt ausprägbar sind.

Eine besonders vorteilhafte Ausführungsform der Erfindung sieht vor, dass die Ausprägungen eines der Ausstattungsmerkmale jeweils durch Ausprägungskennungen, die insbesondere alphanumerisch sind, gekennzeichnet werden, die für das Produkt eindeutig sind. Hierdurch wird eine einfache Verwaltung der Ausprägungen ermöglicht und ferner sichergestellt, dass anhand der Ausprägungskennung erkennbar ist, welches Ausstattungsmerkmal ausgeprägt ist. Erstellt man eine Liste der Ausstattungsmerkmale und ordnet diesen jeweils ihre Ausprägungskennungen zu, so ist es möglich, anhand der Ausprägungskennung auf das entsprechende Ausstattungsmerkmal zurückzuschließen, welches durch die Ausprägungskennung ausgeprägt wird.

Das Ausprägen der Ausstattungsmerkmale erfolgt vorteilhafterweise so, dass zum Auswählen der Ausprägungen der Ausstattungsmerkmale eine oder mehrere Konfigurationstabellen erstellt werden, in der/denen die Ausprägungen und/oder Ausprägungskennungen jeweils nach Ausstattungsmerkmalen sortiert aufgelistet sind. Anhand einer solchen Konfigurationstabelle können die einzelnen Ausstattungsmerkmale für die Konfigurationen des Produkts festgelegt bzw. ausgeprägt werden. Durch die Verwendung von Konfigurationstabellen ist sichergestellt, dass alle Ausstattungsmerkmale ausgeprägt werden.

Eine vorteilhafte Weiterbildung der Erfindung sieht vor, dass die Konfigurationstabelle oder die Konfigurationstabellen in Form einer Ausstattungsmerkmale-Konfigurationen-Matrix erzeugt werden. In einer solchen Ausstattungsmerkmale-Konfigurationen-Matrix sind beispielsweise die Ausprägungskennungen und gegebenenfalls Erläuterungen der Ausprägungen, die sie repräsentieren, jeweils ausstattungsmerkmalsweise gruppiert den Zeilen zugeordnet. Die (freien) Spalten der Ausstattungsmerkmale-Konfigurationen-Matrix werden jeweils einer Konfiguration zugewiesen. Beim Ausprägen der Ausstattungsmerkmale wird nun jeweils für jede Konfiguration für jedes Ausstattungsmerkmal jeweils genau eine Ausprägungskennung markiert. Die Ausstattungsmerkmale-Konfigurationen-Matrix kann sowohl in Papierform als auch in elektronischer Form erzeugt werden. Unter einer elektronischen Form wird eine Form verstanden, die auf einem Anzeigegerät eines Computers darstellbar ist und mit Hilfe von Erfassungsmitteln des Computers manipulierbar ist. Alternativ kann eine Konfigurationstabelle auch als Bildschirmmaske ausgebildet sein, in der einzelne Knöpfe mit Hilfe von Erfassungsmitteln markiert werden können. Ebenso ist es möglich, für jedes Ausstattungsmerkmal eine Aufklappliste vorzusehen, aus der die entsprechende Ausprägung bzw. Ausprägungskennung auswählbar ist. Insbesondere eine elektronische Form kann hierbei so ausgestaltet werden, dass jeweils für eine Konfiguration nur eine Ausprägungskennung je Ausstattungsmerkmal auswählbar ist. Hierdurch wird eine besonders hohe Sicherheit beim Ausprägen der Ausstattungsmerkmale erreicht.

Die Konfigurationstabelle oder die Konfigurationstabellen des Referenzprodukts ermöglichen bzw. erleichtern es ferner, die Abhängigkeiten von den Ausstattungsmerkmalen aus einer Stückliste des Referenzprodukts zu extrahieren. Das Extrahieren kann automatisch erfolgen. Da über die Konfigurationstabellen des Referenzproduktes eine Zuordnung jeder Ausprägungskennung zu einem Ausstattungsmerkrüal möglich ist, unabhängig davon, welche Ausprägung für dieses Ausstattungsmerkmal gewählt wurde, ist es möglich, anhand der in der 150%-Stückliste des Referenzprodukts aufgeführten Ausprägungen, auf die entsprechenden Ausstattungsmerkmale zurückzuschließen. Hierdurch kann das Festlegen der Abhängigkeiten von den Ausstattungsmerkmalen für die einzelnen Produktkomponenten vollständig oder nahezu vollständig automatisiert werden.

Auf ähnliche Weise können die Ausstattungsmerkmale, für die Ausprägungen zu ermitteln sind, anhand des Referenzprodukts ermittelt werden. Eine besonders vorteilhafte Ausführungsform der Erfindung sieht daher vor, dass die Ausstattungsmerkmale, für die eine Ausprägung festzulegen ist, anhand von Ausstattungsmerkmalen des Referenzproduktes ermittelt werden, die für das Referenzprodukt bekannt sind. Das Ermitteln der Ausstattungsmerkmale kann ebenfalls anhand der 150%-Stückliste des Referenzprodukts und gegebenenfalls den zugehörigen oder der zugehörigen Konfigurationstabelle des Referenzprodukts erfolgen.

Eine besonders vorteilhafte Ausführungsform der Erfindung erhält man, wenn die Stückliste als bauraumorientierte Stückliste ausgestaltet wird. Jeder Produktkomponente entspricht dann ein Bauraum in dem Produkt. Hierdurch wird sichergestellt, dass bereits in einer frühen Planungsphase Kollisionen im räumlichen Bereich des Produkts vermieden oder frühzeitig erkannt werden können.

Ferner ist es insbesondere am Anfang einer Neuentwicklung des Produkts besonders hilfreich, eine Stückliste zu erstellen, die nur die wesentlichen Komponenten umfasst. Die Auswahl, welche Komponenten wesentlich sind, kann anhand vorfestgelegter Kriterien erfolgen. Mögliche Kriterien sind eine Baugröße, eine Komplexität, eine Fertigungsdauer, der Preis der Produktkomponente, ein Merkmal, das angibt, ob die Produktkomponente selbst entwickelt oder durch einen Zulieferer entwickelt werden soll usw. Eine besonders bevorzugte Weiterbildung der Erfindung sieht daher vor, dass aus der Stückliste nach einem oder mehreren Vorauswahlkriterien nur ein Teil der Produktkomponenten ausgewählt wird, um eine produktorientierte Grobstruktur-Stückliste zu erhalten. Dieser Auswahlschritt kann bereits am Anfang des Verfahrens erfolgen. In der Regel werden hierdurch Kleinbauteile wie Schrauben und Unterlegscheiben sowie geringwertige Produktkomponenten, die keinen Entwicklungsaufwand benötigen und/oder geringe Kosten verursachen, zunächst nicht in die Stückliste aufgenommen, um diese übersichtlich und kompakt zu halten. Dennoch ist eine solche produktorientierte Grobstruktur-Stückliste ein für die Entwicklung eines Produktes wichtige Informationsquelle. Von etwa 14.000 Produktkomponenten, die in einer 150%-Stückliste eines Golfs der Baureihe V der Volkswagen AG enthalten sind, werden bereinigt um Normteile wie Schrauben, Muttern und Scheiben etwa 3.800 unterschiedliche Produktkomponenten für ein Fahrzeug verbaut, die teilweise mehrfach verbaut werden. Jedoch werden durch etwa 700 Produktkomponenten 90% der Kosten verursacht. Für eine Entwicklungsplanung sind somit diese 700 Produktkomponenten zunächst von besonderer Bedeutung.

Bei einer Weiterbildung der Erfindung ist vorgesehen, dass das Zuordnen und gegebenenfalls das Eliminieren von Ausprägungssätzen erfolgt, indem für jede Produktkomponente, für die Abhängigkeiten von Ausstattungsmerkmalen ermittelt wurden, für jede der Konfigurationen jeweils ein Ausprägungssatz (tupel) gebildet wird, der die Ausprägungskennungen und/oder Ausprägungen eines jeden Ausstattungsmerkmals umfasst, von dem die Produktkomponente abhängig ist, und anschließend gleiche Ausprägungssätze (tupel) eliminiert werden. Diese Vorgehensweise ist einfach und zuverlässig, um die Ausprägungssätze für die entsprechenden Produktkomponenten zu ermitteln. Die Anzahl der unterschiedlichen Ausprägungssätze für eine Produktkomponente entspricht der Anzahl der Varianten dieser Produktkomponente.

Um auch neue Ausstattungsmerkmale und Produktkomponenten mit einbeziehen zu können, die im Referenzprodukt nicht enthalten oder bekannt sind, sieht eine bevorzugte Ausführungsform der Erfindung vor, dass zusätzlich zu den anhand des Referenzprodukts ermittelten Ausstattungsmerkmalen zusätzliche Ausstattungsmerkmale bestimmt werden und/oder zusätzliche und/oder andere Abhängigkeiten der Produktkomponenten von den Ausstattungsmerkmalen anhand erfasster Vorgaben festgelegt werden. So können neue oder andere Abhängigkeiten, die für das neue Produkt gelten, eingefügt werden.

Die Erfindung wird nachfolgend anhand eines bevorzugten Ausführungsbeispieles unter Bezugnahme auf eine Zeichnung näher erläutert. Die Fig. zeigen:
- Fig. 1: einen Ausschnitt aus einer baumartig ausgestalteten Stückliste eines Fahrzeugs;
- Fig. 2: eine als Ausstattungsmerkmale-Konfigurationen-Matrix ausgestaltete Konfigurationstabelle zum Ausprägen einiger Ausstattungsmerkmale eines Vordersitzes eines Fahrzeugs;
- Fig. 3: einen Ausschnitt aus einer Stückliste eines Referenzprodukts;
- Fig. 4: eine schematische Darstellung zur Erläuterung der Ermittlung von Ausprägungssätzen für einzelne Produktkomponenten; und

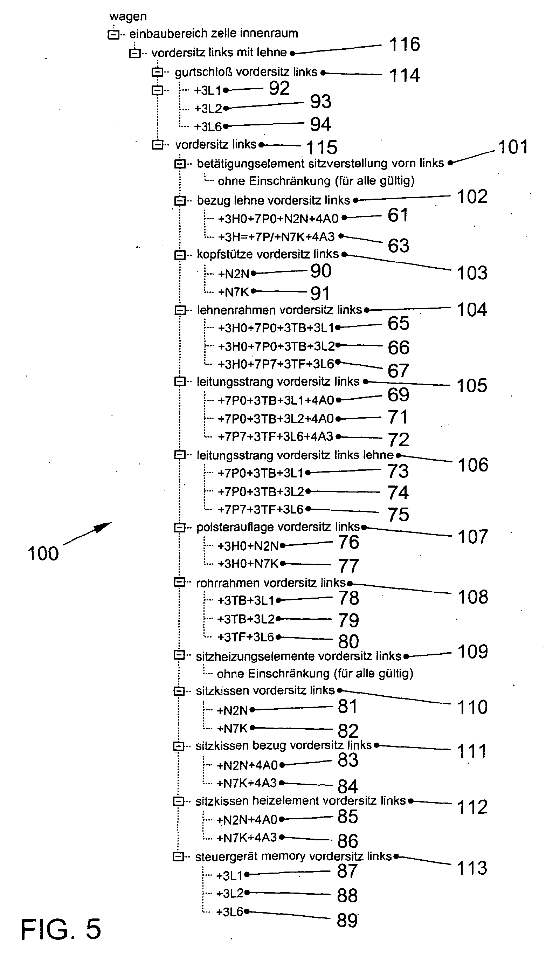

- Fig. 5: einen Ausschnitt der mit Varianten der Produktkomponenten versehenen Stückliste des Wagens nach Fig. 1.

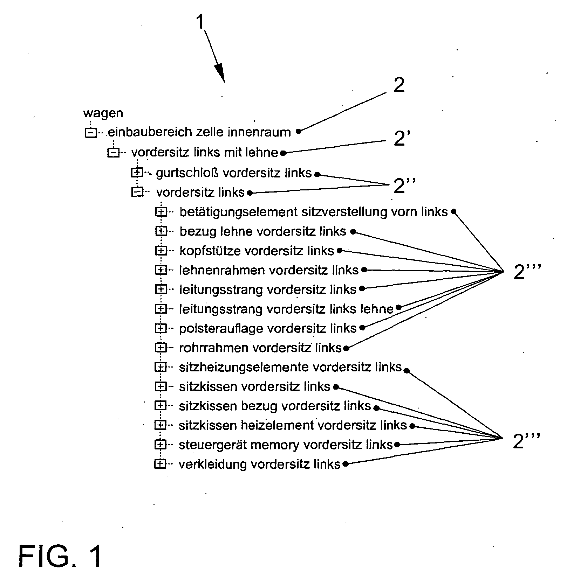

In Fig. 1 ist ein Auszug aus einer baumartig strukturierten Stückliste eines Kraftfahrzeugs dargestellt. Die baumartig strukturierte Stückliste 1 bildet die Struktur eines Produkts ab. In dem hier exemplarisch beschriebenen Fall ist das Produkt ein Kraftfahrzeug. Die in Fig. 1 dargestellte Stückliste 1 ist eine bauraumorientierte Stückliste. Dies bedeutet, dass für jeden Bauraum eine Produktkomponente 2 vorgesehen ist. Die Produktkomponenten 2 können wiederum weitere Produktkomponenten 2', 2", 2'" usw. umfassen. Im Folgenden wird erläutert, wie die Stückliste 1 um Varianten erweitert werden kann. Insbesondere wird betrachtet, wie sich die Varianten der Komponente 2" ("vordersitz links") und der Produktkomponenten 2"', die von der Produktkomponente 2" ("vordersitz links") umfasst sind, ergeben.

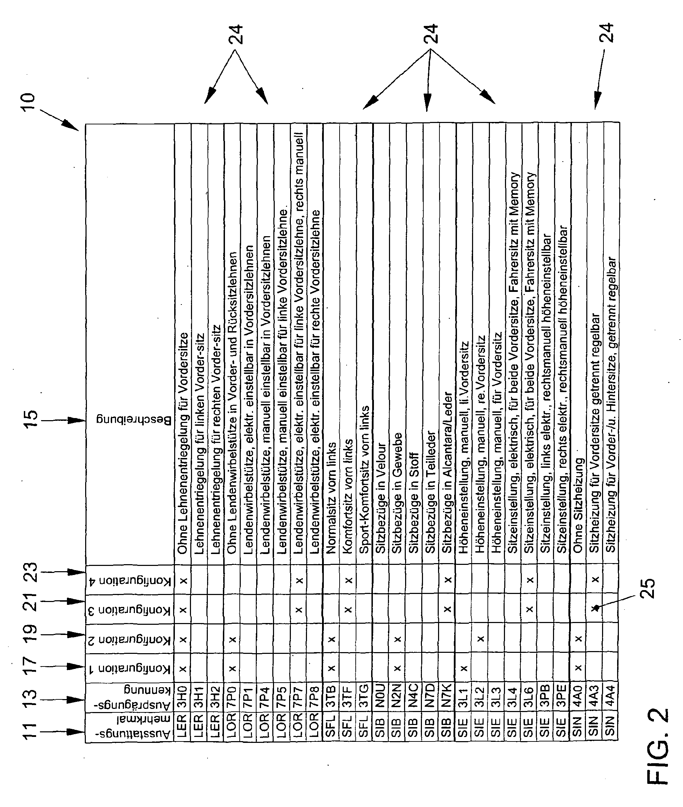

In Fig. 2 ist eine Konfigurationstabelle 10 wiedergegeben, die in Form einer Ausstattungsmerkmale-Konfigurationen-Matrix ausgestaltet ist. In einer ersten Spalte 11 sind für jedes Ausstattungsmerkmal des Vordersitzes Ausstattungsmerkmalkennzeichnungen aufgeführt, die jeweils aus drei Buchstaben bestehen. In einer zweiten Spalte 12 sind jeweils die Ausprägungskennungen für die einzelnen Ausstattungsmerkmale aufgeführt. Die Ausprägungskennungen sind alphanumerische Kennungen aus drei Zeichen. Sie sind für das Produkt, welches durch die Stückliste 1 nach Fig. 1 beschrieben wird, eindeutig. In einer Spalte 15 wird für jede Ausprägung eine Beschreibung in Textform wiedergegeben. In die mittleren Spalten 17, 19, 21 und 23 sind unterschiedlichen Konfigurationen des Produkts, Konfiguration 1 bis Konfiguration 4, zugewiesen. Die Ausstattungsmerkmale-Konfigurationen-Matrix ist in Blöcken 24 gegliedert, die durch kräftige eingezeichnete horizontale Linien kenntlich gemacht sind. In den einzelnen Blöcke 24 sind jeweils die Ausprägungen bzw. Ausprägungskennungen eines der jeweiligen Ausstattungsmerkmale zusammengefasst. Um die verschiedenen Ausstattungsmerkmale des Vordersitzes auszuprägen, muss für jede Konfiguration in jedem dieser Blöcke genau eine Ausprägung, d.h. eine Ausprägungskennung, ausgewählt werden. Die Auswahl einer Ausprägung bzw. Ausprägungskennung ist jeweils durch ein Kreuz 25 kenntlich gemacht.

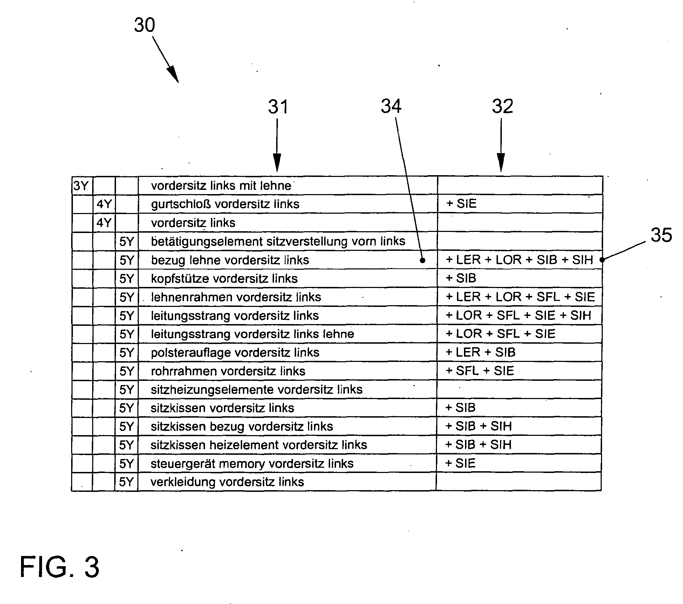

In Fig. 3 ist eine Stückliste 30 eines linken Vordersitzes mit Lehne eines Referenzfahrzeugs dargestellt. In einer mittleren Spalte 31 sind Beschreibungen von Produktkomponenten des Referenzfahrzeugs aufgeführt. In einer weiteren Spalte 32 sind die Ausstattungsmerkmale angegeben, von denen eine Variantenbildung der entsprechenden Produktkomponente abhängig ist. Die Produktkomponente "bezug lehne vordersitz links" 34 ist von der "Lehnenentriegelung" (LER), den "Lendenwirbelstützen in den Lehnen" (LOR), den "Sitzbezügen" (SIB) und der "Sitzheizung" (SIH) abhängig, wie einem Feld 35 entnommen werden kann. Diese Abhängigkeiten werden aus der Stückliste 30 des Referenzfahrzeugs extrahiert und den entsprechenden Produktkomponenten 2'" nach Fig. 1 zugeordnet.

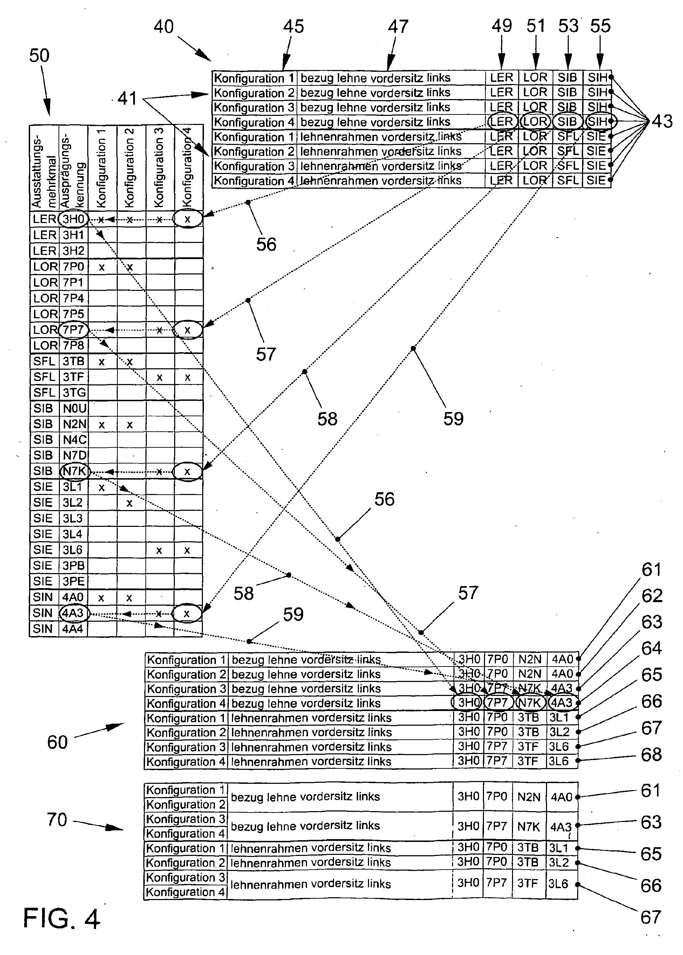

Anhand von Fig. 4 wird beispielhaft erläutert, wie den Produktkomponenten die entsprechenden Ausprägungen in Form von Ausprägungssätzen zugeordnet werden. Hierzu wird eine Tabelle erstellt, von der ein Ausschnitt 40 in Fig. 4 dargestellt ist. Die Tabelle gliedert sich in Abschnitte 41. Die Anzahl der Abschnitte entspricht der Anzahl der Produktkomponenten, für die Abhängigkeiten von Ausstattungsmerkmalen ermittelt sind. Dies bedeutet, dass die Tabelle für jede dieser Produktkomponenten einen Abschnitt 41 aufweist. Jeder der Abschnitte 41 weist für jede der Konfigurationen (Konfiguration 1 bis Konfiguration 4) eine Zeile 43 auf. In einer ersten Spalte 45 ist jeweils die Bezeichnung der Konfiguration angegeben. In einer zweiten Spalte 47 ist jeweils die Produktkomponente bezeichnet. In den sich daran anschließenden Spalten 49, 51, 53, 55 sind jeweils die Ausstattungsmerkmalkennungen der Ausstattungsmerkmale angegeben, von denen die entsprechende Produktkomponente abhängig ist. Die Anzahl der benötigten Spalten 49 bis 55 hängt somit für jede Produktkomponente von der Anzahl der Ausstattungsmerkmale ab, von denen eine Produktkomponente abhängig ist. Wie anhand der Stückliste 30 des Referenzprodukts nach Fig. 3 ermittelt wurde, ist die Produktkomponente "bezug lehne vordersitz links" 34 von den Ausstattungsmerkmalkennungen, die in einem Feld 35 aufgeführt sind, abhängig. Diese Ausstattungsmerkmalkennungen sind die "Lehnenentriegelung" (LER), die "Lendenwirbelstützen in den Lehnen" (LOR), die "Sitzbezüge" (SIB) und die "Sitzheizung" (SIH).

Die Ausstattungsmerkmalkennungen werden jetzt für die einzelnen Konfigurationen durch die ausgewählten Ausprägungskennungen bzw. Ausprägungen ersetzt. Dies erfolgt anhand der Konfigurationstabelle 10 nach Fig. 2, von der ein Ausschnitt 50 in Fig. 4 dargestellt ist. Beispielhaft werden die Ersetzungen für die Konfiguration 4 der Produktkomponente "bezug lehne vordersitz links" betrachtet. Das Ausstattungsmerkmal "Lehnenentriegelung" (LER) wird bei der Konfiguration 4 durch die Ausprägungskennung 3H0 ersetzt 56. Anschließend wird das Ausstattungsmerkmal "Lendenwirbelstützen in Lehnen" (LOR) durch die Ausprägungskennung 7P7 ersetzt 57. Für das Ausstattungsmerkmal "Sitzbezüge" (SIB) wird die Ausprägungskennung N7K eingesetzt 58. Schließlich wird für die Ausstattungskennung "Sitzheizung" (SIH) die Ausprägungskennung 4A3 eingesetzt 59. Ersetzt man auf ähnliche Weise die Ausstattungsmerkmale für sämtliche Konfigurationen und sämtliche Produktkomponenten durch die gemäß der Konfigurationstabelle 10 nach Fig. 2 festgelegten Ausprägungen bzw. Ausprägungskennungen, so erhält man eine weitere Tabelle; von der ein Ausschnitt 60 in Fig. 4 dargestellt ist, der mit dem Ausschnitt 40 korrespondiert. Für jede Produktkomponente ist so jedem Ausstattungsmerkmal jeweils ein Ausprägungssatz 61 - 68 zugeordnet, der die Ausprägungskennung bzw. Ausprägungen der Ausstattungsmerkmale umfasst, von denen die Produktkomponente abhängig ist. Es zeigt sich, dass die so ermittelten Ausprägungssätze 61 - 68 von verschiedenen Konfigurationen teilweise identisch sind. Beispielsweise sind die Ausprägungssätze 61 und 62, die für die Produktkomponente "bezug lehne vordersitz links" die Abhängigkeiten für die Konfigurationen 1 und 2 beschreiben, identisch. Ebenso sind die Ausprägungssätze 63, 64, die zu den Konfigurationen 3 und 4 gehören, ebenfalls identisch. Die identischen Ausprägungssätze werden eliminiert und man erhält eine weitere Tabelle, von der ein korrespondierender Ausschnitt.70 dargestellt ist. Aus dieser Darstellung kann entnommen werden, dass die Produktkomponente "bezug lehne vordersitz links" in nur zwei Varianten auftritt. Die Produktkomponente "lehnenrahmen vordersitz links" weist hingegen drei Varianten auf. Die so ermittelten Ausprägungssätze 61, 63, 65, 66, 67, die die einzelnen Varianten der Produktkomponenten eindeutig definieren, werden schließlich der Stückliste 1 nach Fig. 1 zugewiesen. So erhält man die Stückliste 100 mit Varianten, wo zu erkennen ist, dass die Produktkomponente "bezug lehne vordersitz links" 102. zwei Varianten aufweist, die durch die Ausprägungssätze 61, "+ 3H0 + 7P0 + N2N + 4A0", und 63, "+ 3H0 + 7P7 + N7K + 4A3", gekennzeichnet sind. Der Produktkomponente 104 "lehnenrahmen vordersitz links" werden die gemäß dem anhand von Fig. 4 beschriebenen Verfahren ermittelten Ausprägungssätze 65, 66 und 67 zugewiesen. Auch den übrigen Produktkomponenten 103, 105 -115 der Produktkomponente "vordersitz links mit lehne" 116 sind die entsprechenden Ausprägungssätze 69, 71 -94 zugewiesen. Es ergibt sich, dass den Produktkomponenten "betätigungselement sitzverstellung vordersitz links" 101 und "sitzheizungselement vordersitz links" 109 jeweils kein Ausprägungssatz zugewiesen ist. Hieraus folgt, dass diese beiden Produktkomponenten 101 und 109 keine Varianten für die vier betrachteten Konfigurationen bilden.

Treten zu den Ausstattungsmerkmalen, die bereits im Referenzprodukt bekannt sind, neue Ausstattungsmerkmale auf, so können Abhängigkeiten von diesen Ausstattungsmerkmalen hinzugefügt werden. Ebenso kann mit Produktkomponenten verfahren werden, die in dem Referenzprodukt nicht bekannt sind. Hierzu werden Vorgaben erfasst, die die Abhängigkeiten festlegen. Diese zuzufügenden Abhängigkeiten sind jedoch Zahlenmäßig vorteilhafterweise gering, so dass ein guter Überblick erhalten bleibt und die angestrebte Vollständigkeit der Stückliste nicht gefährdet wird.

Das beschriebene Verfahren kann fast vollständig mit Hilfe einer computergestützten Vorrichtung ausgeführt werden, die die Ausprägungen und gegebenenfalls die Vorgaben mittels Erfassungsmitteln erfasst. Das Ermitteln der Abhängigkeiten und Zuweisen der Ausprägungssätze kann in Software und/oder oder Hardware umgesetzt werden.

## Patentansprüche

1. Verfahren zum Erzeugen einer Stückliste (100) eines Produkts, das Produktkomponenten (101-116) umfasst, von denen mindestens eine Varianten umfasst, wobei mittels der Stückliste (100) eine Anzahl von unterschiedlichen Konfigurationen des Produkts beschreibbar ist und wobei jede der Konfigurationen Ausstattungsmerkmale umfasst und jedes Ausstattungsmerkmal mindestens zwei Ausprägungen umfasst und eine Konfiguration durch einen vollständigen Satz von Ausprägungen der Ausstattungsmerkmale definiert ist, wobei
a. für jede der Konfigurationen jeweils für jedes der Ausstattungsmerkmale genau eine Ausprägung ausgewählt wird,
b. für die Produktkomponenten Abhängigkeiten von den Ausstattungsmerkmalen zumindest teilweise anhand von bekannten Abhängigkeiten eines Referenzprodukts erfasst und festgelegt werden,
c. jeder Produktkomponente die Ausprägungen der Ausstattungsmerkmale, von denen die Produktkomponente gemäß der festgelegten Abhängigkeiten abhängig ist, jeweils als Ausprägungssatz (61-69, 71-94) für die unterschiedlichen Konfigurationen zugeordnet werden, wobei identische Ausprägungssätze (62, 64, 68) eliminiert werden, und
d. den Produktkomponenten (101-116) der Stückliste jeweils die zugeordneten Ausprägungssätze (61, 63, 65-67, 69, 71-94) zugewiesen werden.

2. Verfahren nach Anspruch 1, **dadurch gekennzeichnet, dass** die Ausprägungen eines der Ausstattungsmerkmale jeweils durch Ausprägungskennungen, die insbesondere alphanumerisch sind, **gekennzeichnet** werden, die für das Produkt eindeutig sind.

3. Verfahren nach Anspruch 1 oder 2, **dadurch gekennzeichnet, dass** zum Auswählen der Ausprägungen der Ausstattungsmerkmale eine oder mehrere Konfigurationstabellen (10) erstellt werden, in der die Ausprägungen und/oder Ausprägungskennungen jeweils nach Ausstattungsmerkmalen sortiert aufgelistet sind.

4. Verfahren nach Anspruch 3, **dadurch gekennzeichnet, dass** die Konfigurationstabelle oder die Konfigurationstabellen (10) in Form einer Ausstattungsmerkmale-Konfigurationen-Matrix erzeugt werden.

5. Verfahren nach einem der Ansprüche 1 bis 4, **dadurch gekennzeichnet, dass** die Abhängigkeiten von den Ausstattungsmerkmalen aus einer Stückliste (30) des Referenzprodukts extrahiert werden.

6. Verfahren nach einem der.Ansprüche 1 bis 5, **dadurch gekennzeichnet, dass** die Ausstattungsmerkmale, für die eine Ausprägung festzulegen ist, anhand von Ausstattungsmerkmalen des Referenzprodukts ermittelt werden, die für das Referenzprodukt bekannt sind.

7. Verfahren nach einem der Ansprüche 1 bis 6, **dadurch gekennzeichnet, dass** die die Stückliste (100) bauraumorientiert ist.

8. Verfahren nach einem der Ansprüche 1 bis 7, **dadurch gekennzeichnet, dass** aus der Stückliste (100) nach einem oder mehreren Vorauswahlkriterien, nur ein Teil der Produktkomponenten ausgewählt wird, um eine produktorientierte Grobstruktur-Stückliste zur erhalten.

9. Verfahren nach einem der Ansprüche 1 bis 8, **dadurch gekennzeichnet, dass** das Zuordnen und gegebenenfalls das Eliminieren von Ausprägungssätzen (61-69, 71-94) erfolgt, in dem für jede Produktkomponente (102-108,110-116), für die Abhängigkeiten von Ausstattungsmerkmalen ermittelt wurden, für jede der Konfigurationen jeweils ein Ausprägungssatz (tupel) (61-69, 71-94) gebildet wird, der die Ausprägungskennungen und/oder Ausprägungen eines jeden Ausstattungsmerkmals umfasst, von dem die Produktkompönente (102-108,110-116) abhängig ist, und anschließend gleiche Ausprägungssätze (tupel) (62, 64, 68) eliminiert werden.

10. Verfahren nach einem der Ansprüche 1 bis 9, **dadurch gekennzeichnet, dass** zusätzlich zu den anhand des Referenzprodukts ermittelten Ausstattungsmerkmalen zusätzliche Ausstattungsmerkmale bestimmt werden und/oder zusätzliche und/oder andere Abhängigkeiten der Produktkomponenten (101-116) von den Ausstattungsmerkmalen festgelegt werden.
